# EUROPEAN PATENT APPLICATION

(11) **EP 1 321 330 A2**
(43) Date of publication of application: **25.06.2003**
(21) Application number: 02028509.4
(22) Date of filing: 19.12.2002
(51) Int. Cl.: B60L 11/18

(54) **Motor-driven vehicle and control method thereof**

(30) Priority: 21.12.2001 JP 2001388851
(71) Applicant: TOYOTA JIDOSHA KABUSHIKI KAISHA, Aichi-ken 471-8571 (JP)
(72) Inventor: Kanno, Yoshihito, Toyota-shi, Aichi-ken, 471-8571 (JP)
(74) Representative: Winter, Brandl, Fürniss, Hübner, Röss, Kaiser, Polte Partnerschaft

(57) **Abstract**

An ECU closes a second relay and third relay while opening a first relay so that a drive motor and a variable resistor are connected in series, when it is determined based on detected accelerator opening θacc and vehicle speed Vc that a requirement for applying the brake on the vehicle has been made. The drive motor is driven by an external force which is input via wheels of the vehicle, thus operating as a power generation braking device. The ECU sets a variable resistance value Vc based on the accelerator opening θacc and the vehicle speed Vc. Thus, the electric power generated by the drive motor is consumed via an inverter by the variable resistor whose resistance value Rv has been set to a certain value. Accordingly, the amount of load to be applied on a mechanical braking system of a motor-driven vehicle can be reduced and an improved drivability in decelerating the vehicle can be achieved.

## Description

### BACKGROUND OF THE INVENTION

### 1. Field of Invention

The present invention relates to a motor-driven vehicle which uses a motor as its driving force source, and to a control method thereof.

### 2. Description of Related Art

Generally, in a vehicle including an internal combustion engine as its driving force source (will hereinafter be referred to as "an engine-driven vehicle"), a fine control of the vehicle speed can be easily performed by reducing a depression amount of an accelerator pedal, namely by applying a so-called engine brake, which originates from a friction loss, pumping loss, and the like, in the internal combustion engine. In particular, such an engine brake is effectively used for decelerating the vehicle speed in a relatively high vehicle speed range, whereby the amount of load which may otherwise be applied on a mechanical braking system of the vehicle can be reduced.

In the meantime, in the case of a vehicle including only a motor as its driving force source (will hereinafter be referred to as "a motor-driven vehicle"), even when the depression amount of the accelerator pedal is reduced, the motor that generally has a small friction loss as compared to an internal combustion engine continues to rotate due to an inertial force, thus generating driving force. With such a motor-driven vehicle, it is therefore difficult to obtain an adequate braking force such as that obtained by applying an engine brake as described above. Accordingly, as compared to engine-driven vehicles, motor-driven vehicles involve a problem related to the poor vehicle drivability attributed to the difficulty in adjusting the vehicle speed by the accelerator pedal.

In motor-driven vehicles, moreover, since an adequate braking force can only be obtained using a mechanical braking system, the mechanical braking system is therefore operated under a large load as compared to mechanical braking systems of engine-driven vehicles. In the case of motor-driven vehicles, therefore, it is generally necessary to enforce the mechanical braking systems. To counter this problem, in some motor-driven vehicles, a regenerative brake is also used for applying the brake on the vehicle. This does not eliminate, however, the necessity for enforcing mechanical braking systems in a motor-driven vehicle, since the regenerative brake can no longer be used when a secondary battery has been charged to its full capacity.

### SUMMARY OF THE INVENTION

In view of the above problems, it is an object of the present invention to reduce the amount of load on a mechanical braking system and improve the vehicle drivability for deceleration in motor-driven vehicles. It is another object of the invention to reduce the amount of load on a mechanical braking system and achieve an earlier completion of a warming-up operation of a fuel cell system in motor-driven vehicles which uses the fuel cell system as a power supply.

To achieve the above objects, a vehicle according to a first aspect of the invention includes a motor for outputting a vehicle required power to the vehicle, fuel cell system for generating an electric power, temperature detecting means for detecting the temperature of the fuel cell system, electric power consuming means for consuming an electric power, and switching device control means. The switching device is arranged to selectively switch a connection state among a first connection state wherein the fuel cell system and the electric power consuming means are connected, second connection state wherein the motor and the electric power consuming means are connected, and third connection state wherein the fuel cell system and the motor are connected. The switching device control means is adapted to control the switching device so as to establish the first connection state when the temperature of the fuel cell system detected by the temperature detecting means is equal to or lower than a predetermined temperature.

In the vehicle constructed as described above, the electric power consuming means is selectively connected to either one of the fuel cell system and motor. Thus, the warming-up operation of the fuel cell system can be accelerated and the drive motor can be used as a power generation braking device for applying the brake on the vehicle. That is, when the temperature of the fuel cell system is equal to or lower than the predetermined temperature, the electric power consuming means is connected to the fuel cell system so that the fuel cell system is operated under a high load, thus accelerating the warming-up operation thereof.

In the vehicle according to the first aspect of the invention, it is preferable that the electric power consuming means is a variable resistor whose resistance value increases as the temperature detected by the temperature detecting means reduces below the predetermined temperature. In this case, an appropriate amount of load can be applied on the fuel cell system in accordance with its temperature, whereby the time required for completing the warming-up operation of the fuel cell system can be reduced regardless of its temperature.

Also, it is preferable that the vehicle according to the first aspect invention further includes a reduction detecting means for detecting a reduction in the vehicle required power, a motor control means is adapted to operate the motor as a braking means for applying the brake on the vehicle when a reduction in the vehicle required power is detected, and the switching device control means is adapted to control the switching device so as to establish the second connection state when a reduction in the vehicle required power is detected. With this arrangement, the amount of load to be applied on the mechanical braking system can be reduced by using the motor as the braking means. Also, the electric power that is generated by the motor while it is operating as the braking means is consumed by the electric power consuming means. Thus, the motor can be used as needed for applying the brake on the vehicle even when power regeneration is not allowed, which results in an improved drivability of the motor-driven vehicle.

Also, it is preferable that the vehicle according to the first aspect of the invention further includes an accelerator pedal for inputting the vehicle required power and vehicle speed detecting means for detecting a vehicle speed of the vehicle, and the reduction detecting means is adapted to detect a reduction in the vehicle required power when the depression amount of the accelerator pedal is equal to or smaller than a predetermined value and the vehicle speed detected by the vehicle speed detecting means is equal to or higher than a predetermined value. Accordingly, further accuracy is achieved in detecting a reduction in the vehicle required power.

In the vehicle according to the first aspect of the invention, it is preferable that the electric power consuming means is a variable resistor whose resistance value increases as the depression amount of the accelerator pedal reduces below the predetermined value. In this case, an electric power can be appropriately consumed in accordance with the degree of reduction in the vehicle required power.

Also, it is preferable that the vehicle according to the first aspect of the invention further includes a reduction detecting means for detecting a reduction in the vehicle required power and the switching device control means is adapted to control the switching device so as to establish the third connection state when a reduction in the vehicle required power is not detected and the detected temperature of the fuel cell system is higher than the predetermined temperature. In this case, the motor-driven vehicle operates in a normal operating state.

A vehicle according to a second aspect of the invention includes a motor for outputting a vehicle required power to the vehicle, power supply for supplying a power to the motor, reduction detecting means for detecting a reduction in the vehicle required power, motor control means, electric power consuming means, switching device, and switching device control means. The motor control means is adapted to operate the motor as a braking means for applying the brake on the vehicle when a reduction in the vehicle required power is detected. The electric power consuming means is arranged to consume the electric power that is generated by the motor while it is operating as the braking means. The switching device is arranged to selectively switch a connection state between a first connection state wherein the motor and the electric power consuming means are connected and a second connection state wherein the power supply and the motor are connected. The switching device control means is adapted to control the switching device so as to establish the first connection state when the reduction detecting means detects a reduction in the vehicle required power.

With the vehicle constructed as described above, the amount of load to be applied on the mechanical braking system can be reduced by using the motor as the braking means when a reduction in the vehicle required power is detected. Also, since the electric power that is generated by the motor while it is operating as the braking means is consumed by the electric power consuming means, the motor can be used for applying the brake on the vehicle even when a power regeneration is not allowed. Accordingly, the drivability of the motor-driven vehicle can be improved.

It is preferable that the vehicle according to the second aspect of the invention further includes an accelerator pedal for inputting the vehicle required power and the reduction detecting means is adapted to detect a reduction in the vehicle required power when the depression mount of the accelerator pedal changes to a smaller value. In this case, a reduction in the vehicle-required power is detected on the basis of the operation of the accelerator pedal, whereby the motor-driven vehicle can have as a good drivability as that of an engine-driven vehicle.

In the vehicle according to the second aspect of the invention, it is preferable that the electric power consuming means is a variable resistor whose resistance value increases as the depression amount of the accelerator pedal reduces or a motor for driving an auxiliary, which motor is driven when a reduction in the vehicle required power is detected. Whether the electric power consuming means is such a variable resistor or motor, the electric power consuming means acts as a load on the motor when it is operating as a power generator. Thus, the rotation speed of the motor is reduced and a braking force is thereby generated.

Also, it is preferable that the vehicle according to the second aspect of the invention further includes an accelerator pedal for inputting the vehicle required power and vehicle speed detecting means for detecting the vehicle speed of the vehicle, and the reduction detecting means is adapted to detect a reduction in the vehicle required power when the depression amount of the accelerator pedal is equal to or smaller than a predetermined value and the vehicle speed detected by the vehicle speed detecting means is equal to or higher than a predetermined value. In this case, further accuracy can be achieved in detecting a reduction in the vehicle required power.

In the vehicle according to the second aspect of the invention, it is also preferable that the power supply is a fuel cell system or consists of a fuel cell system and secondary battery. In the former case, the vehicles uses only the fuel cell system as the power supply. In the latter case, the vehicle uses the fuel cell system and secondary battery as the power supply.

A vehicle according to a third aspect of the invention includes a motor for outputting a vehicle required power to the vehicle, secondary battery for charging and discharging an electric power, electric power consuming means for consuming an electric power, switching device, reduction detecting means for detecting a reduction in the vehicle required power, the motor control means is adapted to operate the motor as a braking means for applying the brake on the vehicle when a reduction in the vehicle required power is detected, and switching device control means. The switching device is arranged to selectively switch a connection state between a first connection state wherein the motor and the electric power consuming means are connected and a second connection state wherein the secondary battery and the motor are connected. The switching device control means is adapted to control the switching device so as to establish the first connection state when a reduction in the vehicle required power is detected and the charged capacity of the secondary battery is equal to or larger than a predetermined value.

In the vehicle constructed as described above, the electric power consuming means begins to consume the power that is generated by the motor operating as the braking means when a reduction in the vehicle required power is detected while the charged capacity of the secondary battery is equal to or larger than the predetermined value. With this arrangement, the motor can be used for applying the brake on the vehicle and the amount of load to be applied on the mechanical braking system can be thereby reduced even when a power regeneration is not allowed. Also, when the electric power is thus consumed by the electric power consuming means, it reduces the rotation speed of the motor, whereby the drivability of the motor-driven vehicle can be improved.

In the vehicle according to the third aspect of the invention, it is preferable that the switching device control means is adapted to control the switching device so as to establish the second connection state when a reduction in the vehicle required power is detected and the charged capacity of the secondary battery is smaller than the predetermined value. In this case, a means of the power that has been consumed by the motor can be regained, which results in an improved energy efficiency of the vehicle.

Also, it is preferable that the vehicle according to the third aspect of the invention further includes a fuel cell system as a main power supply and the switching device is arranged to selectively switch a connection state among the first connection state, the second connection state, and a third connection state wherein the fuel cell system and the motor are connected, and the switching device control means is adapted to control the switching device so as to establish the third connection state when a reduction in the vehicle required power is not detected. With this arrangement, the motor can operate using the power supplied from the fuel cell system and a means of the power which has been consumed by the motor can be regained and charged in the secondary battery.

A braking control method according to a forth aspect of the invention is used in a vehicle including a motor for outputting a vehicle required power, fuel cell system for generating an electric power, temperature detecting means for detecting the temperature of the fuel cell system, and electric power consuming means for consuming an electric power. The braking control method includes detecting a temperature of the fuel cell system by means of the temperature detecting means, determining whether the temperature of the fuel cell system is equal to or lower than a predetermined temperature, and establishing a first connection state selected from the first connection state wherein the fuel cell system and the electric power consuming means are connected, a second connection state wherein the motor and the electric power consuming means are connected, and a third connection state wherein the fuel cell system and the motor are connected, when the temperature of the fuel cell system is equal to or lower than the predetermined temperature. According to this method, the electric power consuming means is selectively connected to either one of the fuel cell system and the motor, whereby the warming-up operation of the fuel cell system can be accelerated and the drive motor can be used as a power generation braking device for applying the brake on the vehicle. That is, when the temperature of the fuel cell system is equal to or lower than the predetermined temperature, the electric power consuming means is connected to the fuel cell system so that the fuel cell system is operated under a high load, thus accelerating the warming-up operation thereof.

A braking control method according to a fifth aspect of the invention is used in a vehicle including a motor for outputting a vehicle required power to the vehicle, a power supply for supplying a power to the motor, a reduction detecting means for detecting a reduction in the vehicle required power, a motor control means which operates the motor as a braking means for applying the brake on the vehicle when a reduction in the vehicle required power is detected, and an electric power consuming means for consuming an electric power generated by the motor being operated as the braking means. The braking control method includes establishing a first connection state selected from the first connection state wherein the motor and the electric power consuming means are connected and a second connection state wherein the power supply and the motor are connected when the reduction detecting means detects a reduction in the vehicle required power. According to this method, the amount of load to be applied on the mechanical braking system can be reduced by using the motor as the braking means when a reduction in the vehicle required power is detected. Also, since the electric power that is generated by the motor while it is operating as the braking means is consumed by the electric power consuming means, the motor can be used for applying the brake on the vehicle even when a power regeneration is not allowed. Accordingly, the drivability of the motor-driven vehicle can be improved.

A braking control method according to a sixth aspect of the invention is used in a vehicle including a motor for outputting a vehicle required power to the vehicle, secondary battery for charging and discharging an electric power, electric power consuming means for consuming an electric power, reduction detecting means for detecting a reduction in the vehicle required power, and a motor control means which operates the motor as a braking means for applying the brake on the vehicle when a reduction in the vehicle required power is detected. This braking control method includes detecting the charged capacity of the secondary battery, determining whether the charged capacity of the secondary battery is equal to or larger than a predetermined value, and establishing a first connection state selected from the first connection state wherein the motor and the electric power consuming means are connected and a second connection state wherein the secondary battery and the motor are connected, when a reduction in the vehicle required power is detected and the charged capacity of the secondary battery is equal to or larger than the predetermined value. According to this method, the amount of load to be applied on the mechanical braking system can be reduced by using the motor as the braking means when a reduction in the vehicle required power is detected. Also, since the electric power generated by the motor operating as the braking means is consumed by the electric power consuming means, the motor can be used for applying the brake on the vehicle even when a power regeneration is not allowed. Thus, the drivability of the motor-driven vehicle can be improved.

### BRIEF DESCRIPTION OF THE DRAWINGS

The foregoing and/or further objects, features and advantages of the invention will become more apparent from the following description of preferred embodiments with reference to the accompanying drawings, in which like numerals are used to represent like elements and wherein:
Fig. 1 is a view schematically showing a construction of a motor-driven vehicle according to a first embodiment of the invention;
Fig. 2 is a flowchart of a control routine that is executed when a warming-up operation of a fuel cell system is performed in the motor-driven vehicle according to the first aspect of the invention;
Fig. 3 shows one example of a map used for determining a resistance value of a variable resistor during the warming-up operation of the fuel cell system;
Fig. 4 is a flowchart of a vehicle braking control routine executed in the motor-driven vehicle according to the first embodiment of the invention;
Fig. 5 shows one example of a map used for determining a basic resistance value in accordance with an accelerator opening when implementing a braking process of the routine;
Fig. 6 shows one example of a map used for determining a correction value corresponding to the basic resistance value in accordance with a vehicle speed when implementing the braking process of the routine;
Fig. 7 is a view schematically showing a construction of a motor-driven vehicle according to a second embodiment of the invention; and
Fig. 8 is a flowchart of a vehicle braking control routine executed in the motor-driven vehicle according to the second embodiment of the invention.

### DETAILED DESCRIPTION OF PREFERRED EMBODIMENTS

### (FIRST EMBODIMENT)

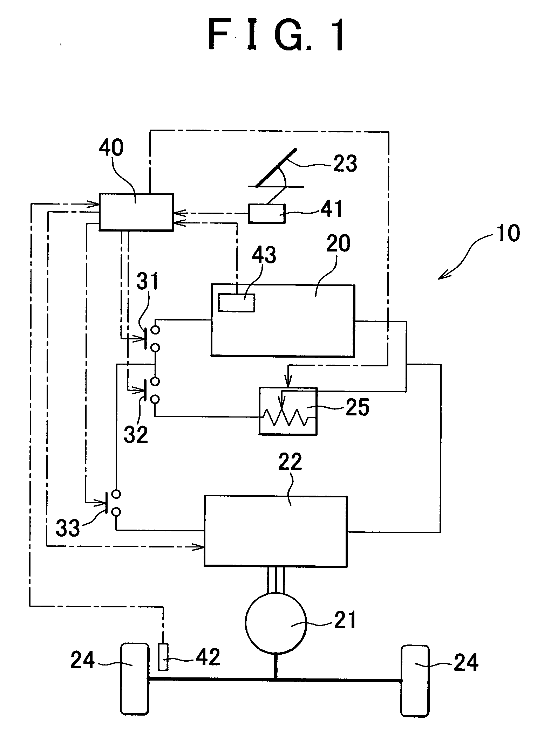

Hereinafter, a motor-driven vehicle according to a first embodiment of the invention will be described with reference to Fig. 1. Fig. 1 schematically shows the construction of a motor-driven vehicle 10 which includes a fuel cell system 20, drive motor 21, inverter 22, accelerator pedal 23, wheels 24, and variable resistor 25. The fuel cell system 20 serves as a power supply of the motor-driven vehicle 10. The drive motor 21 is operated to convert an electric power supplied from the power supply into a driving force. The inverter 22 is adapted to control the operation of the drive motor 21. The accelerator pedal 23 is used for inputting a vehicle required power, a power required to be output to the vehicle 10. The wheels 24 are driven by the drive motor 21. The resistance value of the variable resistor 25 can be continuously changed.

The fuel cell system 20, inverter 22, and variable resistor 25 are connected via power lines such that three different closed electric circuits can be selectively established. More specifically, when the vehicle required power is reduced (i.e., when a braking force is required), a first relay 31 is opened while second and third relays 32, 33 are closed to establish a closed circuit in which the inverter 22 and the variable resistor 25 are connected in series. Under the normal operating state of the vehicle, the second relay 32 is opened while the first and third relays 31, 33 are closed to establish a closed circuit in which the fuel cell system 20 and the inverter 22 are connected in series. When performing a warming-up operation of the fuel cell system 20, the third relay 33 is opened while the first and second relays 31, 32 are closed to establish a closed circuit in which the fuel cell system 20 and the variable resistor 25 are connected in series.

The motor-driven vehicle 10 is provided with an electronic control unit (ECU) 40. The ECU 40 is arranged to control the operation of the fuel cell system 20 and drive motor 21, the opening and closing operation of the relays 31, 32, and 33, and the resistance value of the variable resistor 25. The ECU 40 includes a central processing unit (CPU), recording mediums (RAM, ROM), and other components, which are not shown in the figure.

The ECU 40 are connected via signal lines to various sensors for detecting operation conditions of the motor-driven vehicle 10, such as an accelerator opening sensor 41 that detects the depression amount of an accelerator pedal as "accelerator opening θ", vehicle speed sensor 42 which is disposed in the vicinity of one of the wheels 24 for detecting the vehicle speed, and temperature sensor 43 for detecting the temperature of the fuel cell system 20. The ECU 40 are also connected via signal lines to the respective relays 31, 32, and 33, inverter 22, and variable resistor 25.

The fuel cell system 20 is a battery system which generates an electric power using a reformed gas which is produced by a reformer (not shown) and includes hydrogen, or a hydrogen gas as a fuel. In the meantime, a fuel supply system for supplying reformed gas, air, and the like is not shown in the figures.

The drive motor 21 is a three-phase synchronous motor including a rotor provided with a plurality of permanent magnets disposed on its periphery, and a stator wound with wires to form a three-phase coil. The rotor of the drive motor 21 is connected via a gear mechanism, or the like, to the wheels 24. A driving force is generated and output to the wheels 24 when the rotor is driven to rotate by mutual reactions that occur between an electromagnetic field produced by each permanent magnet of the rotor and that produced by the three-phase coil of the stator. In the meantime, when a deceleration requirement (a braking requirement) is made, the drive motor 21 begins to operate as a power generation braking device. At this time, more specifically, the rotor of the drive motor 21 is driven by an external force and the mutual reactions between the electromagnetic fields are thereby caused so that electromotive forces are generated at respective ends of the three-phase coil.

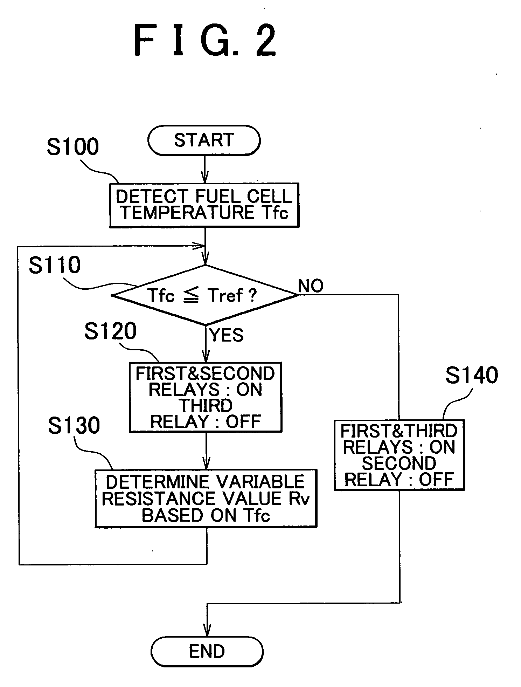

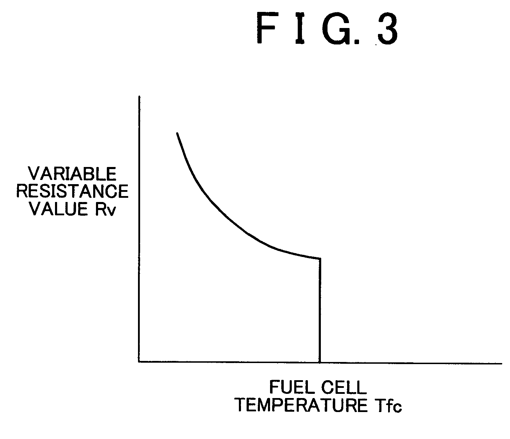

Next, a warming-up operation of the fuel cell system 20 which is performed in the motor-driven vehicle 10 of the first embodiment will be described with reference to Figs. 2 and 3. Fig. 2 is a flowchart of a control routine that is executed when performing the warming-up operation of the fuel cell system 20, and Fig. 3 shows one example of a map used for determining the resistance value of the variable resistor 25 during the warming-up operation of the fuel cell system 20.

This control routine begins, for example, when a requirement for starting the operation of the motor-driven vehicle 10 is made. Here, it is to be noted that the relays 31, 32, and 33 are all open before beginning this routine. The ECU 40 first detects a temperature Tfc of the fuel cell system 20 via the temperature sensor 43 (step S100), and then determines whether the detected temperature Tfc is equal to or lower than a reference temperature Tref (step S110). Here, if the reference temperature Tref is set to 0 °C, for example, whether the water produced during the operation of the fuel cell system 20 (will hereinafter be described as "the resultant water") can be frozen is determined in this step. When the temperature Tfc is higher than the reference temperature Tref (step S110: NO), it means that the resultant water can not be frozen, and the ECU 40 therefore closes the first and third relays 31, 33 while opening the second relay 32 (step S140), after which the routine ends.

When the temperature Tfc is equal to or lower than the reference temperature Tref (step S110: YES), conversely, the ECU 40 closes the first and second relays 31, 32 and opens the third relay 33 so that the fuel cell system 20 and variable resistor 25 are connected in series (step S120). Subsequently, the ECU 40 determines a variable resistance value Rv of the variable resistor 25 in accordance with the detected temperature Tfc of the fuel cell system 20 using a map as shown in Fig. 3, and sets the resistance value of the variable resistor 25 to the determined variable resistance value Rv (step S130), after which the ECU 40 returns to the step S110. Thus, these steps S120 to S130 are repeated until the ECU 40 determines that the temperature Tfc of the fuel cell system 20 is higher than the reference temperature Tref, namely until the warming-up operation of the fuel cell system 20 has been completed.

In the map of Fig. 3, a horizontal axis represents the temperature Tfc of the fuel cell system 20 while a vertical axis represents the variable resistance value Rv. As shown in Fig. 3, the variable resistance value Rv increases as the detected temperature Tfc reduces. When the temperature Tfc is low, therefore, the fuel cell system 20 is operated under a high load so that the reactions in the fuel cell system 20 are accelerated and the time required for completing the warming-up operation is thereby reduced. By thus warming up the fuel cell system 20, freezing of the resultant water, which may occur when starting up the fuel cell system 20 under low temperature, can be prevented.

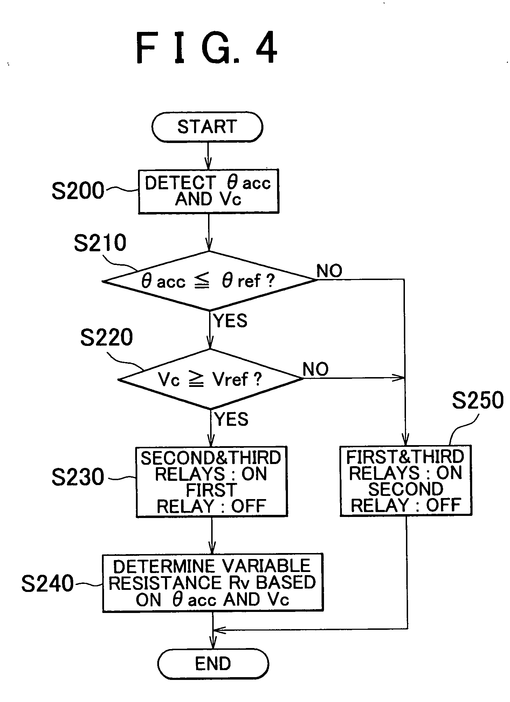

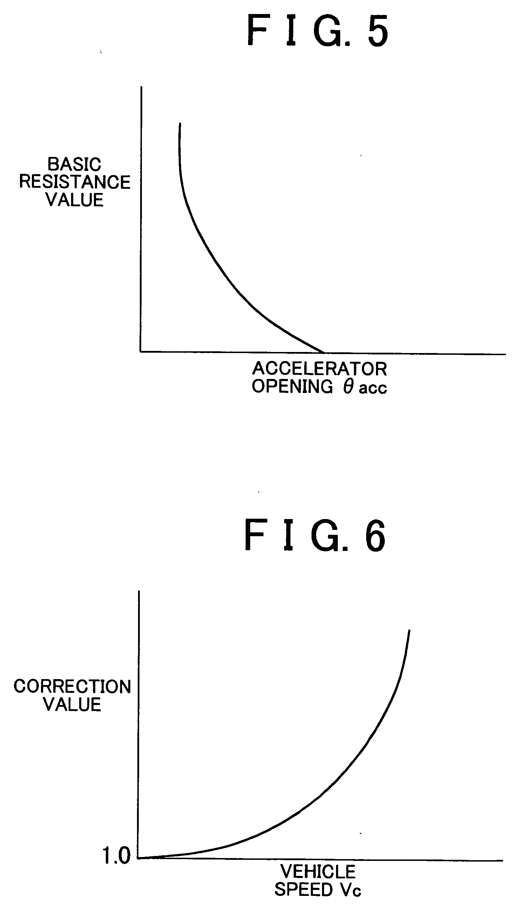

Next, a vehicle braking control procedure which is performed in the motor-driven vehicle 10 of the first embodiment will be described with reference to Figs. 4 to 6. Fig. 4 is a flowchart of a vehicle braking control routine executed in the motor-driven vehicle of the first embodiment. Fig. 5 shows one example of a map used for determining a basic resistance value in accordance with an accelerator opening *θ*acc, while Fig. 6 shows one example of a map used for determining a correction value corresponding to the basic resistance value in accordance with a vehicle speed Vc. These values are determined when implementing a braking process of the routine.

Since this braking control routine needs to be executed appropriately when the vehicle required power is reduced (i.e., when a requirement for decelerating the vehicle or applying the brake on the vehicle is made), it is repeatedly executed at predetermined time intervals. When the routine begins, the ECU 40 first detects the accelerator opening θacc via the accelerator opening sensor 41 and detects the vehicle speed Vc via the speed sensor 42 (step S200).

The ECU 40 then determines whether the detected accelerator opening *θ*acc is equal to or smaller than a reference accelerator opening *θ*ref (step S210). When the detected accelerator opening θacc is equal to or smaller than the reference accelerator opening θref (step S210: YES), the ECU 40 then determines whether the detected vehicle speed Vc is equal to or higher than a reference vehicle speed Vref (step S220).

When the vehicle speed Vc is equal to or higher than the reference vehicle speed Vref (step S220: YES), the ECU 40 closes the second and third relays 32, 33 while opening the first relay 31 (step S230) so that the drive motor 21 and variable resistor 25 are connected in series in the circuit for applying the brake on the vehicle. In this state where the electric connection between the fuel cell system 20 as a power supply and the drive motor 21 (inverter 22) is shut off, the drive motor 21 is driven by an external force that is input via the wheels 24, thus operating the motor 21 as a power generation braking device. That is, when the vehicle speed Vc is in a high speed range while the accelerator opening θacc is small, it is generally assumed that a deceleration requirement (a braking requirement) is being made by operating the accelerator pedal 23, and the motor 21 is therefore used for applying the brake on the vehicle.

Subsequently, the ECU 40 determines a basic variable resistance value Rvb in accordance with the detected accelerator opening θacc using a map as shown in Fig. 5, and the ECU 40 thereafter determines a correction value for correcting the basic variable resistance value Rvb in accordance with the detected vehicle speed Vc using a map as shown in Fig. 6. The ECU 40 then determines a variable resistance value Rv by multiplying the basic variable resistance value Rvb with the correction value (step S240), and sets the resistance value of the variable resistor 25 to the determined variable resistance value Rv, after which the routine ends.

In this state where the current generated by the drive motor 21 is applied via the inverter 22 to the variable resistor 25, the electric power converted from a mechanical power (a driving force) by the drive motor 21 is consumed as a thermal energy at the variable resistor 25. Thus, the drive motor 21 can be used as needed for applying the brake on the vehicle without being put into "power regeneration impossible condition", which is a problem when the drive motor 21 is used as a regenerative motor.

Further, when the drive motor 21 is connected to an external resistance as described above, the current reduces and the rotation speed of the rotor of the drive motor 21 thereby reduces. By thus limiting the inertial motion of the drive motor 21, it is possible to generate an equivalent braking force to that obtained when applying an engine brake in an internal combustion engine. Also, as is apparent from Figs. 5 and 6, the variable resistance Rv of the variable resistor 25 is set to a higher value as the required braking force increases. Therefore, the rotation of the rotor of the drive motor 21 can be effectively limited.

On the other hand, when the accelerator opening θacc is larger than the reference accelerator opening *θ*ref (step S210: NO) and the detected vehicle speed Vc is lower than the reference vehicle speed Vref (step S220: NO), the ECU 40 closes the first and third relays 31, 33 while opening the second relay 32 so that the fuel cell system 20 and drive motor 21 are connected (step S250), after which the routine ends. In this case, since it is unnecessary to use the drive motor 21 for applying the brake on the vehicle, the relays 31, 32, and 33 are respectively switched ac required for allowing the normal operating state of the vehicle.

According to the first embodiment of the invention, as described above, by using one variable resistance 25, it becomes possible to accelerate the warming-up operation of the fuel cell system 20 and to apply an electric brake to the motor-driven vehicle 10. Also, as a result of using the variable resistor 25 for accelerating the warming-up operation of the fuel cell system 20 as described above, freezing of the resultant water, which may occur when the temperature Tfc of the fuel cell system 20 is low, can be prevented.

In the first embodiment, as described above, the electric power generated by the drive motor 21 at the time of decelerating the vehicle or applying the brake on the vehicle is consumed by the variable resistor 25. Therefore, an electric brake can be applied on the vehicle as needed even when a power regeneration is not allowed. In the motor-driven vehicle 10, therefore, the amount of load to be applied on the mechanical braking system is reduced, whereby an equivalent braking force to that obtained in an engine-driven vehicle can be obtained without enforcing the mechanical braking system.

Also, since the rotation of the rotor of the drive motor 21 is limited by connecting the drive motor 21 to the variable resistor 25, a similar brake feeling to that of an engine brake in engine-driven vehicles can be obtained, which improves the drivability of motor-driven vehicles.

### (SECOND EMBODIMENT)

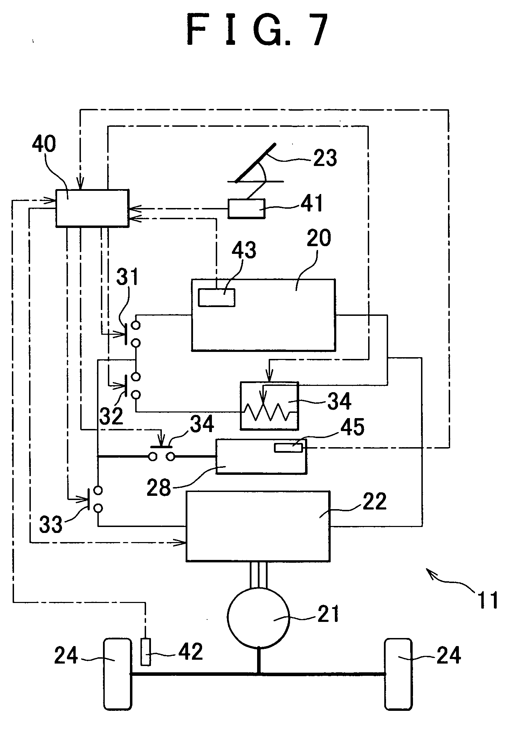

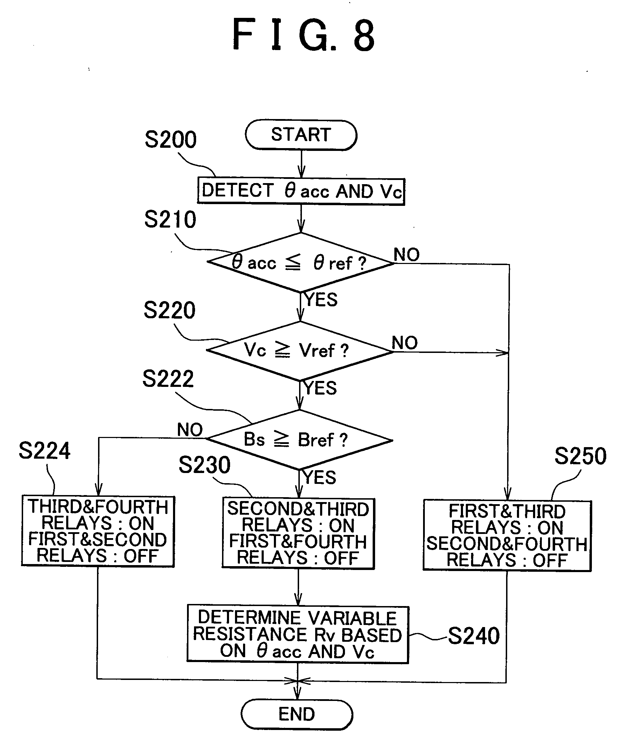

Hereinafter, a motor-driven vehicle according to a second embodiment of the invention will be described with reference to Figs. 7 and 8. Fig. 7 schematically shows the construction of a motor-driven vehicle 11 of the second embodiment. Fig. 8 is a flow chart of a vehicle braking control routine to be executed in the motor-driven vehicle 11.

The motor-driven vehicle 11 includes basically the same elements as those of the motor-driven vehicle 10 of the first embodiment and further includes a secondary battery 28, a fourth relay 34, and a SOC sensor 45 for detecting the charged state of the secondary battery 28. Therefore, the same elements as those of the motor-driven vehicle 10 will be denoted with the same numerals and characters and description thereof will be omitted.

In the second embodiment, the fuel cell system 20 is used as a main power supply, and the secondary battery 28 is used as a secondary power supply which is operated when a sufficient level of power can not be supplied from the fuel cell system 20, such as before the operating state of the fuel cell system 20 becomes stable. The secondary battery 28 also serves as a secondary power supply of the ECU 40 and other electrical components. The secondary battery 28 is arranged to store the electric power that is generated while the drive motor 21 is used for applying the brake on the vehicle, thus enabling a regenerative braking operation in the motor-driven vehicle 11. Meanwhile, the power supply is switched between the fuel cell system 20 and the secondary battery 28 on the basis of a voltage control by a DC-DC converter (not shown).

Next, a vehicle braking control procedure executed in the motor-driven vehicle 11 having a foregoing construction will be described with reference to Fig. 8. Note that the same steps as those of the vehicle braking control routine in the first embodiment will be denoted with the same numerals and description thereof will be omitted.

Since this routine needs to be performed appropriately when the vehicle required power is reduced (i.e., when a requirement for applying the brake on the vehicle is made), it is repeatedly executed at predetermined time intervals. When the routine begins, the ECU 40 first detects the accelerator opening θacc via the accelerator opening sensor 41 and the vehicle speed Vc via the speed sensor 42 (step S200).

When "YES" is obtained both in the steps S210 and S220, the ECU 40 then determines whether a charged capacity Bs of the secondary battery 28 detected by the SOC sensor 45 is equal to or larger than a reference charged capacity Bref (step S222). Namely, whether the secondary battery 28 is sufficiently charged is determined in this step. When the charged capacity Bs is smaller than the reference charged capacity Bref (step S222: NO), the ECU 40 closes the third and fourth relays 33, 34 while opening the first and second relays 31, 32 (step S224), thereby enabling the electric power generated by the drive motor 21 to be charged in the secondary battery 28, after which the routine ends.

When the charged capacity Bs is equal to or larger than the reference charged capacity Bref (step S222: YES), conversely, the ECU 40 closes the second and third relays 32, 33 while opening the first and fourth relays 31, 34 (step S230), and the ECU 40 then sets the variable resistance value Rv (step S240), after which the routine ends. Accordingly, the drive motor 21 operates as a power generation braking device and the electric power generated by the drive motor 21 is consumed by the variable resistor 25.

When "NO" is obtained in the step S210 or S220, conversely, the ECU 40 implements the step S250, after which the routine ends.

As described above, in the motor-driven vehicle 11 of the second embodiment which includes the secondary battery 28 as a secondary power supply, the drive motor 21 operates as a regenerative braking device when the charged capacity of the secondary battery 28 detected by the SOC sensor 45 is not sufficient. According to the second embodiment, therefore, a portion of the power that has been consumed by the drive motor 21 can be regained at the time of decelerating the vehicle or applying the brake on the vehicle, which results in improved energy efficiency of the vehicle 11.

In the second embodiment, too, even when the charged capacity of the secondary battery 28 detected by the SOC sensor 45 is sufficient, the drive motor 21 can be used for applying the brake on the vehicle by operating it as a power generation braking device and the amount of load to be applied on the mechanical braking system can thereby be reduced as described in the first embodiment. Further, whether the drive motor 21 is either operated as a regenerative braking device or power generation braking device, a braking force can be obtained as needed by applying an electric brake, which leads to an improved drivability of the motor-driven vehicle 11 especially for decelerating and braking operation thereof.

While the invention has been described with reference to the preferred embodiments thereof, it is to be understood that the preferred embodiments are provided for the purpose of facilitating understanding of the invention but do not put any limit to the invention. To the contrary, the invention is intended to cover various modifications and equivalent arrangements within the spirit and scope of the invention.

In the first embodiment, the drive motor 21 is used for applying the brake on the vehicle when the accelerator opening θacc is equal to or smaller than the reference accelerator opening θref and the vehicle speed Vc is equal to or higher than the reference vehicle speed Vref. Alternatively, the drive motor 21 may used for applying the brake on the vehicle, for example, when the accelerator opening θacc is zero (i.e., when the accelerator pedal 23 is released). Also, by monitoring changes in the accelerator opening *θ*acc with time, the drive motor may be used for applying the brake on the vehicle when a reduction in the accelerator opening θacc per unit of time becomes equal to or larger than a predetermined value.

With regard to the second embodiment, while the motor-driven vehicle 11 includes the fuel cell system 20 and secondary battery 28, it may include only the secondary battery 28 as its main power supply. Also in this case, even when the drive motor 21 can not be operated as a regenerative braking device, the vehicle braking operation using an electric brake can be continued by operating the drive motor 21 as a power generation braking device, whereby a desired braking ability can be achieved without enforcing the mechanical braking system. Also, in the first embodiment, the secondary battery 28 may be used in place of the fuel cell system 20. In this case, the warming-up operation of the fuel cell system 20 can be omitted.

Also, while the vehicle braking operation by the drive motor 21 is mainly performed in accordance with the operation of the accelerator pedal 23 in the above-described embodiments, it may certainly be performed also when a brake pedal is depressed.

Also, while the variable resistor 25 is used as power consuming means in the above-described embodiments, a resistor having a constant resistance value may be used instead. Alternatively, the electric power generated by the drive motor 21 may be consumed by operating electric auxiliaries such as an air-blower for sending air to the fuel cell system 20 and a compressor of an air-conditioning system. When the power is thus consumed by the air-blower, an excessive amount of air which may be supplied from the air blower can be adjusted to an appropriate amount by releasing it to the outside, for example. Also, when the motor-driven vehicle includes a compressor which is mechanically driven by a drive shaft, or the like, braking force may also be obtained when engaging the compressor with the drive motor 21. That is, in this case, a braking force can be obtained by applying a mechanical friction, as well as applying an electric resistance.

Further, the map for determining the variable resistance value Rv in the above-described embodiments is just one example. That is, the map may be such that the resistance value linearly changes with respect to the accelerator opening θ acc, fuel cell temperature Tfc and so on.

Also, while no means for detecting the resistance value of the variable resistor 25 is provided in the above-described embodiments, resistance value detecting portion may be provided in order to achieve further accuracy in changing the resistance value.

## Claims

1. A vehicle (10) including a motor (21) for outputting a vehicle required power to the vehicle (10), a fuel cell system (20) for generating an electric power, temperature detecting means (43) for detecting a temperature of the fuel cell system (20), and electric power consuming means (25) for consuming an electric power, the vehicle being **characterized by** further comprising
a switching device (31, 32, 33) which selectively switches a connection state among a first connection state wherein the fuel cell system (20) and the electric power consuming means (25) are connected, a second connection state wherein the motor (21) and the electric power consuming means (25) are connected, and a third connection state wherein the fuel cell system (20) and the motor (21) are connected; and
switching device control means (40) which controls the switching device (31, 32, 33) to establish the first connection state when the temperature of the fuel cell system (20) detected by the temperature detecting means (43) is equal to or lower than a predetermined temperature.

2. The vehicle (10) according to claim 1, **characterized in that**
the electric power consuming means (25) comprises a variable resistor (25), a resistance value of which increases as the temperature detected by the temperature detecting means (43) reduces below the predetermined temperature.

3. The vehicle (10) according to claim 1, further comprising reduction detecting means (41) for detecting a reduction in the vehicle required power, and motor control means (22) which operates the motor (21) as braking means for applying the brake on the vehicle (10) when a reduction in the vehicle required power is detected, the vehicle (10) being **characterized in that**
the switching device control means (40) controls the switching device (31, 32, 33) to establish the second connection state when a reduction in the vehicle required power is detected.

4. The vehicle (10) according to any one of claims 3, further comprising an accelerator pedal (23) for inputting the vehicle required power; and
vehicle speed detecting means (42) for detecting a vehicle speed of the vehicle (10), the vehicle (10) being **characterized in that**
the reduction detecting means (41) detects a reduction in the vehicle required power when a depression amount of the accelerator pedal (23) is equal to or smaller than a predetermined value and the detected vehicle speed is equal to or higher than a predetermined value.

5. The vehicle (10) according to claim 4, **characterized in that** the electric power consuming means (25) comprises a variable resistor (25), a resistance value of which increases as the depression amount of the accelerator pedal (23) reduces below the predetermined value.

6. The vehicle (10) according to any one of claims 1, further comprising reduction detecting means (41) for detecting a reduction in the vehicle required power, the vehicle (10) being **characterized in that**
the switching device control means (40) controls the switching device (31, 32, 33) to establish the third connection state when a reduction in the vehicle required power is not detected and the detected temperature of the fuel cell system (20) is higher than the predetermined temperature.

7. A vehicle (11) including a motor (21) for outputting a vehicle required power to the vehicle (11), a power supply (20) for supplying an electric power to the motor (21), reduction detecting means (41) for detecting a reduction in the vehicle required power, the vehicle (11) being **characterized by** further comprising
motor control means (22) which operates the motor (21) as braking means for applying the brake on the vehicle (11) when a reduction in the vehicle required power is detected;
electric power consuming means (25) for consuming an electric power generated by the motor (21) being operated as the braking means;
a switching device (31, 32, 33, 34) which selectively switches a connection state between a first connection state wherein the motor (21) and the electric power consuming means (25) are connected and a second connection state wherein the power supply (20) and the motor (21) are connected; and
switching device control means (40) which controls the switching device (31, 32, 33, 34) to establish the first connection state when the reduction detecting means (41) detects a reduction in the vehicle required power.

8. The vehicle (11) according to claim 7, further comprising an accelerator pedal (23) for inputting the vehicle required power, the vehicle (11) being **characterized in that**
the reduction detecting means (41) detects a reduction in the vehicle required power when a depression mount of the accelerator pedal (23) reduces.

9. The vehicle (11) according to claim 8, **characterized in that**
the electric power consuming means (25) comprises a variable resistor (25), a resistance value of which increases as the depression amount of the accelerator pedal (23) reduces.

10. The vehicle (11) according to claim 8, **characterized in that**
the electric power consuming means (25) comprises an motor (21) for driving an auxiliary, which motor (21) is driven when a reduction in the vehicle required power is detected.

11. The vehicle (11) according to claim 7, further comprising
an accelerator pedal (23) for inputting the vehicle required power; and
vehicle speed detecting means (11) for detecting a vehicle speed of the vehicle (11), the vehicle (11) being **characterized in that**
the reduction detecting means (41) detects a reduction in the vehicle required power when a depression amount of the accelerator pedal (23) is equal to or smaller than a predetermined value and the vehicle speed detected by the vehicle speed detecting means (42) is equal to or higher than a predetermined value.

12. The vehicle (11) according to claim 11, **characterized in that** the electric power consuming means (25) comprises a variable resistor (25), a resistance value of which increases as the depression amount of the accelerator pedal (23) reduces below the predetermined value.

13. The vehicle (11) according to claim 7, **characterized in that**
the switching device control means (40) controls the switching device (31, 32, 33, 34) to establish the second connection state when a reduction in the vehicle required power is not detected.

14. The vehicle (11) according to any one of claims 7 to 13, **characterized in that**
the power supply (20) comprises a fuel cell system (20).

15. The vehicle (11) according to claim 14, **characterized in that**
the power supply (20, 28) further comprises a secondary battery (28).

16. A vehicle (11) including a motor (21) for outputting a vehicle required power to the vehicle, a secondary battery (28) for charging and discharging an electric power, and electric power consuming means (25) for consuming an electric power, the vehicle (11) being **characterized by** further comprising
a switching device (31, 32, 33, 34) which selectively switches a connection state between a first connection state wherein the motor (21) and the electric power consuming means (25) are connected and a second connection state wherein the secondary battery (28) and the motor (21) are connected;
reduction detecting means (41) for detecting a reduction in the vehicle required power;
motor control means (22) which operates the motor (21) as braking means for applying the brake on the vehicle (11) when a reduction in the vehicle required power is detected;and
switching device control means (40) which controls the switching device (31, 32, 33, 34) to establish the first connection state when a reduction in the vehicle required power is detected and a charged capacity of the secondary battery (28) is equal to or larger than a predetermined value.

17. The vehicle (11) according to claim 16, **characterized in that**
the switching device control means (40) controls the switching device (31, 32, 33, 34) to establish the second connection state when a reduction in the vehicle required power is detected and the charged capacity of the secondary battery (28) is smaller than the predetermined value.

18. The vehicle (11) according to claim 16 or 17, further comprising
a fuel cell system (20) used as a main power supply, the vehicle (11) being **characterized in that** the switching device (31, 32, 33, 34) selectively switches a connection state among the first connection state, the second connection state, and a third connection state wherein the fuel cell system (20) and the motor (21) are connected, and
the switching device control means (40) controls the switching device (31, 32, 33, 34) to establish the third connection state when a reduction in the vehicle required power is not detected.

19. The vehicle (11) according to any one of claims 16 to 18 further comprising
an accelerator pedal (23) for inputting the vehicle required power; and
vehicle speed detecting means (42) for detecting a vehicle speed of the vehicle (11), the vehicle (11) being **characterized in that**
the reduction detecting means (41) detects a reduction in the vehicle required power when a depression amount of the accelerator pedal (23) is equal to or smaller than a predetermined value and the detected vehicle speed is equal to or higher than a predetermined value.

20. The vehicle (11) according to claim 19, **characterized in that**
the electric power consuming means (25) comprises a variable resistor (25), a resistance value of which increases as the depression amount of the accelerator pedal (23) reduces below the predetermined value.

21. A braking control method for a vehicle (11) including a motor (21) for outputting a vehicle required power, a fuel cell system (20) for generating an electric power, a temperature detecting means (43) for detecting a temperature of the fuel cell system (20), and an electric power consuming means (25) for consuming an electric power, the braking control method **characterized by** comprising
detecting a temperature of the fuel cell system (20) by the temperature detecting means (43);
determining whether the temperature of the fuel cell system (20) is equal to or lower than a predetermined temperature; and
establishing a first connection state selected from the first connection state wherein the fuel cell system (20) and the electric power consuming means (25) are connected, a second connection state wherein the motor (21) and the electric power consuming means (25) are connected, and a third connection state wherein the fuel cell system (20) and the motor (21) are connected, when the temperature of the fuel cell system (20) is equal to or lower than the predetermined temperature.

22. A motor (21) for outputting a vehicle required power to the vehicle (11), a power supply for supplying a power to the motor (21), a reduction detecting means (41) for detecting a reduction in the vehicle required power, a motor control means (22) which operates the motor (21) as a braking portion for applying the brake on the vehicle (11) when a reduction in the vehicle required power is detected, and an electric power consuming means (25) for consuming an electric power generated by the motor (21) being operated as the braking portion, the braking control method **characterized by** comprising
establishing a first connection state selected from the first connection state wherein the motor (21) and the electric power consuming means (25) are connected and a second connection state wherein the power supply (20) and the motor (21) are connected when the reduction detecting means (41) detects a reduction in the vehicle required power.

23. A braking control method for a vehicle including a motor (21) for outputting a vehicle required power to the vehicle (11), a secondary battery (28) for charging and discharging an electric power, an electric power consuming means (25) for consuming an electric power, a reduction detecting means (41) for detecting a reduction in the vehicle required power, and a motor control portion which operates the motor as a braking portion for applying the brake on the vehicle when a reduction in the vehicle required power is detected, the braking control method **characterized by** comprising
detecting a charged capacity of the secondary battery;
determining whether the charged capacity of the secondary battery is equal to or larger than a predetermined value; and
establishing a first connection state selected from the first connection state wherein the motor and the electric power consuming portion are connected and a second connection state wherein the secondary battery and the motor are connected, when a reduction in the vehicle required power is detected and the charged capacity of the secondary battery is equal to or larger than the predetermined value.
